# DEMANDE DE BREVET EUROPEEN

(11) **EP 1 484 101 A1**
(43) Date de publication de la demande: **08.12.2004**
(21) Numéro de dépôt: 04300299.7
(22) Date de dépôt: 24.05.2004
(51) Int. Cl.: B01D 53/053

(54) **Ensemble séparateur de gaz par adsorption**

(30) Priorité: 02.06.2003 FR 0306608
(71) Demandeur: L'air liquide - Société anonyme à Directoire et Conseil de Surveillance pour l'Etude et l'Exploitation des Procédés G. Claude, 75321 Paris Cedex 07 (FR)
(72) Inventeur: Balland, Lionel, 38690 Colombe (FR); Jean, Philippe, 38100 Grenoble (FR); Schmutz, Nicolas, 38000 Grenoble (FR)
(74) Mandataire: Le Moenner, Gabriel

(57) **Abrégé**

L'ensemble générateur de gaz par séparation par adsorption dans au moins un adsorbeur (3A, 3B), comporte une capacité tampon (4) pour le gaz produit présentant au moins une partie, typiquement en forme de U, formant un espace intérieur ouvert dans lequel est disposée au moins une partie de l'adsorbeur, dans un agencement compact à rigidité et tenue mécanique améliorées.

Application notamment à des générateurs d'oxygène transportables ou embarqués.

## Description

La présente invention concerne les ensembles générateurs de gaz, transportables et/ou intégrés, notamment pour l'élaboration in situ de mélanges gazeux enrichis en oxygène, du type comprenant au moins un adsorbeur contenant un adsorbant pour produire un gaz séparé d'un mélange gazeux d'alimentation, et une capacité tampon pour le gaz produit.

Les générateurs de gaz du type à adsorption à variation de pression, désignés généralement par les sigles PSA ou VSA, mettent en oeuvre une capacité de gaz produit pour éliminer ou du moins réduire grandement les pulsations dans le flux de gaz produit inhérentes au principe de variation de pression utilisé dans ces générateurs.

Dans les installations industrielles, l'adsorbeur et la capacité de gaz produit ayant la forme de cylindres, de grande taille, sont posés côte à côte sur des fondations comme décrit dans US-A-4 509 959. Dans les ensembles autonomes ou embarqués, l'adsorbeur et la capacité, toujours sous la forme de cylindres, sont appariés, également côte à côte dans ou sur un châssis intégrant les équipements, comme décrit par exemple dans les documents US-A-4 584 001 et US-A-4 511 377.

Dans l'état de la technique connu, les capacités de gaz produites conservent leur forme traditionnelle de bidons cylindriques, rendant difficile une intégration poussée des générateurs de gaz.

La présente invention a pour objet de proposer un ensemble autonome de configuration particulièrement compacte et ramassée, de faible poids et présentant une stabilité et une fiabilité accrues.

Pour ce faire, selon une caractéristique de l'invention, la capacité est conformée de façon à présenter au moins une partie formant un espace intérieur ouvert dans lequel est disposé au moins une partie de l'adsorbeur.

Selon d'autres caractéristiques de l'invention :
- ladite partie de la capacité a une structure tubulaire typiquement réalisée à partir de pièces tubulaires assemblées, présentant avantageusement, en projection dans au moins un plan, une forme de U,
- la capacité a une forme annulaire.

La présente invention concerne également l'utilisation d'un tel ensemble comme générateur embarqué d'oxygène et/ou d'azote.

D'autres caractéristiques et avantages de la présente invention ressortiront de la description suivante de modes de réalisation, donnés à titre illustratif mais nullement limitatif, faite en relation avec les dessins annexés, sur lesquels :
- la figure 1 est une vue d'un premier mode de réalisation d'un ensemble générateur de gaz selon l'invention ; et
- la figure 2 est une vue en perspective d'un autre mode de réalisation de l'invention.

Dans la description qui va suivre et sur les dessins, les éléments identiques ou analogues portent les mêmes chiffres de référence.

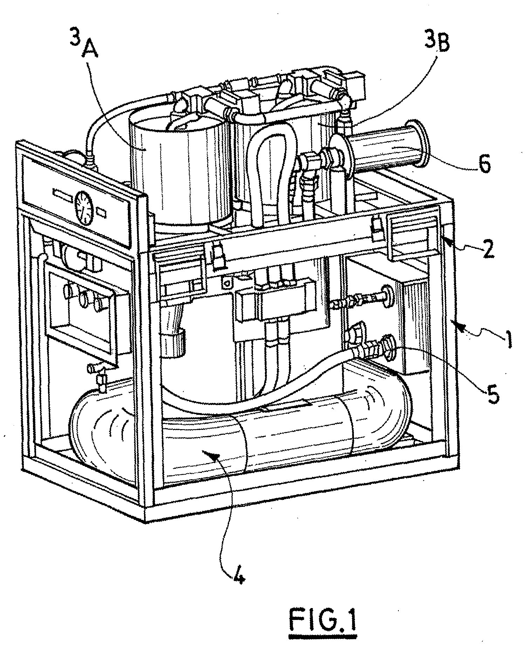

Sur la figure 1, on reconnaît un ensemble concentrateur d'oxygène PSA transportable comprenant, dans un châssis 1, occupant typiquement un volume de 0,6 à 1 m³, pour un poids hors tout du concentrateur d'environ 110 kg, muni de poignées de manutention et de transport 2, deux adsorbeurs 3A et 3B connectables à une source d'air comprimé sous pression via une canalisation d'entrée 5 et fournissant, via une capacité tampon d'oxygène de production 4, de l'oxygène à une pureté supérieure à 92%, typiquement supérieure à 94 %, à un raccord de sortie utilisateur (non visible sur la figure), le mélange gazeux résiduaire appauvri en oxygène étant évacué vers l'extérieur via un silencieux 6.

Selon un aspect de l'invention, dans ce mode de réalisation, le réservoir 4 présente une forme annulaire allongée, réalisée par assemblage bout-à-bout d'éléments tubulaires métalliques conformés de diamètre compris entre 100 et 250 mm, monté horizontalement sur la base du châssis 1 et définissant intérieurement un espace ouvert vers le haut et le bas, dans lequel sont disposées et fixées les embases des adsorbeurs 3A et 3B accolés l'un à l'autre, dans un assemblage d'une grande capacité conférant une rigidité accrue à l'ensemble des éléments disposés dans le châssis 1. Selon les utilisations, le châssis 1 peut être habillé de panneaux isolants et/ou étanches.

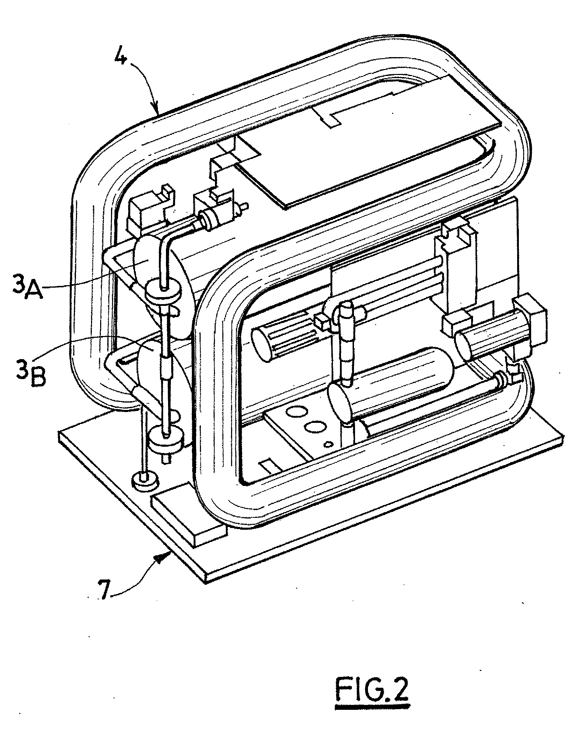

Dans le mode de réalisation de la figure 2, l'ensemble, plus petit que le précédent, est monté sur une plaque support 7, généralement orientée verticalement en utilisation, et la capacité tampon 4 présente ici une forme en quadruple U, formée par cintrage de tubes inox de diamètre inférieur à 12 cm assemblés bout-à-bout avec deux U ouverts dans une direction et parallèles à un premier plan, et deux autres U ouverts dans la direction opposée et parallèles à un second plan orthogonal au premier plan.

Un de ces U est fixé par ses branches sur la plaque support 7 et la totalité des adsorbeurs 3A, 3B, agencés en parallèle à l'axe d'intersection desdits plans des U, des tuyauteries et des principaux équipements sont disposés dans le volume ouvert sur les six faces inscrit dans les U de la capacité 4.

Dans ce mode de réalisation, la capacité 4 assure elle-même une fonction de châssis auto-porteur de protection pour l'ensemble et le poids de l'ensemble, avec deux adsorbeurs incorporant un adsorbent haute capacité, peut être ramené au dessous de 50 kg.

Les ensembles générateurs selon l'invention conviennent tout particulièrement pour la production d'oxygène en utilisant des adsorbants adéquats, typiquement du type zéolite, sous la forme de générateurs d'oxygène On-Site transportables et mobiles pour applications médicales ou sous la forme de générateurs embarqués dans des aéronefs pour la fourniture d'oxygène à des équipages et/ou des passagers de ces aéronefs.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Ensemble générateur de gaz, comprenant au moins un adsorbeur (3A, 3B) contenant un adsorbant pour produire un gaz séparé d'un mélange gazeux d'alimentation, et une capacité tampon pour le gaz produit, **caractérisé en ce que** la capacité (4) est conformée de façon à présenter au moins une partie formant un espace intérieur ouvert dans lequel est disposée au moins une partie de l'adsorbeur (3A, 3B).

2. Ensemble selon la revendication 1, **caractérisé en ce qu'**au moins ladite partie de la capacité est réalisée à partir de pièces tubulaires assemblées.

3. Ensemble selon la revendication 2, **caractérisé en ce que** ladite partie de la capacité a, en projection dans au moins un plan, une forme de U.

4. Ensemble selon la revendication 3, **caractérisé en ce que** la capacité a une forme générale annulaire.

5. Ensemble selon la revendication 3, **caractérisé en ce que** la capacité a une forme en quadruple U.

6. Ensemble selon l'une des revendications précédentes, **caractérisé en ce que** la capacité (4) constitue un élément structurant sur laquelle est fixé au moins un équipement de l'ensemble.

7. Ensemble générateur de gaz transportable autonome selon l'une des revendications précédentes pour la production d'oxygène.
